# EUROPEAN PATENT APPLICATION

(11) **EP 4 678 613 A1**
(43) Date of publication of application: **14.01.2026**
(21) Application number: 24306168.6
(22) Date of filing: 11.07.2024
(51) Int. Cl.: C04B 7/12, C04B 7/24, C04B 20/02

(54) **METHOD OF CALCINING A RAW CLAY MATERIAL FOR USE AS A SUPPLEMENTARY CEMENTITIOUS MATERIAL**

(71) Applicant: Holcim Technology Ltd, 6300 Zug (CH)
(72) Inventor: BENARD, Philippe, 38070 SAINT-QUENTIN-FALLAVIER (FR); DURAND, Thomas, 38070 SAINT-QUENTIN-FALLAVIER (FR); DION, Pascal, 38070 SAINT-QUENTIN-FALLAVIER (FR); TERMKHAJORNKIT, Pipat, 38070 SAINT-QUENTIN-FALLAVIER (FR); MEYER, Vincent, 38070 SAINT-QUENTIN-FALLAVIER (FR)
(74) Representative: SONN Patentanwälte GmbH & Co KG

(57) **Abstract**

A method of calcining a raw clay material for use as a supplementary cementitious material, comprising:
providing a raw clay material comprising sulfur compounds,
providing a waste material comprising hydrated cement paste,
calcining the raw clay material to obtain a calcined material comprising calcined clay, wherein the sulfur compounds present in the raw clay material are oxidized to sulfur oxides,
contacting the sulfur oxides with the waste material, and allowing the sulfur oxides to chemically react with or be adsorbed in the waste material.

## Description

The invention refers to a method of calcining a clay material for use as a supplementary cementitious material.

Various types of mineral components may be added to Portland cement in order to obtain composite cements. In particular, it has become common practice to use pozzolanic and/or latent hydraulic material as supplementary cementitious materials in Portland cement mixtures.

By substituting supplementary cementitious materials for Portland cement the specific emission of CO₂ in the production of cement will be reduced. During the production of Portland cement clinker, high amounts of CO₂ per ton of Portland cement clinker is emitted during the decarbonation of the raw materials and from the combustion of the fuels that occur during calcination of the raw materials.

Supplementary cementitious materials comprise a broad class of siliceous or siliceous and aluminous materials which, in finely divided form and in the presence of water, chemically react with calcium hydroxide at ordinary temperature to form compounds possessing cementitious properties. Examples of supplementary cementitious materials include granulated blast-furnace slag, fly ash, natural pozzolans, burnt oil shale, or calcined clays.

Cement is a product that in most cases is used in locations relatively close to where it is manufactured. Therefore, in case of composite cements, its production requires the availability of a source of a supplementary cementitious material, this source being either natural or synthetic. However, the local availability of such source is not guaranteed in all regions where cement is produced, mainly because of the decreasing availability of some synthetic sources of supplementary cementitious materials. Synthetic supplementary cementitious materials are in most cases a by-product of various industrial processes, such as fly ash from coal-fired power plants or blast-furnace slag from steel mills. The decreasing supply of fly ash from the power industry is encouraging the search for new sources of supplementary cementitious materials for the cement and concrete production.

Therefore, increasing efforts are undertaken to use widely available sources for producing supplementary cementitious materials, such as clays. Kaolinitic clays were shown to be the best clay raw material to produce supplementary cementitious materials, but in its pure form it is only found in a limited number of deposits. For this reason, there has been interest in the possibility of producing supplementary cementitious materials from other locally available natural clays containing other minerals in addition to kaolinite, marls, and other minerals which have the potential to become reactive by developing pozzolanic and/or hydraulic activity. In particular, it has been found that the activation process of various types of raw clay can be carried out mechanically (e.g. by grinding) and/or thermally by heating to a temperature high enough to alter the structure of the clay minerals by dehydroxylation, but low enough to avoid recrystallization and the formation of chemically inert phases.

During the calcination process, sulfur compounds naturally present in the clay and/or in the fuels used for calcination, such as petcoke, are oxidized to sulfur oxides (SOx), primarily sulfur dioxide (SO₂) and sulfur trioxide (SO₃). The main source of sulfur in clay are sulfide minerals like pyrite (FeS₂) or marcasite, which are iron sulfide compounds.

SOx emissions are a major environmental concern due to their significant negative impact on air quality and human health. They contribute to the formation of acid rain, which can lead to the acidification of soils and water bodies, damaging ecosystems and agricultural productivity. Additionally, SOx emissions are a major contributor to air pollution, exacerbating respiratory problems in humans and contributing to the formation of harmful particulate matter and ground-level ozone.

Therefore, it is an object of the invention to adapt a production method of a calcined clay material so as to reduce the SOx emission.

In order to solve this object, the invention provides a method of calcining a raw clay material for use as a supplementary cementitious material, comprising:
providing a raw clay material comprising sulfur compounds,
providing a waste material comprising hydrated cement paste,
calcining the raw clay material to obtain a calcined material comprising calcined clay, wherein the sulfur compounds present in the raw clay material are oxidized to sulfur oxides,
contacting the sulfur oxides with the waste material, and allowing the sulfur oxides to chemically react with or be adsorbed in the waste material.

The invention is based on the idea to use a waste material comprising hydrated cement as a reagent for capturing sulfur oxides that are released from the raw clay material during calcination.

To allow the waste material to act as a sorbent for chemically or physically binding SOx emissions, the waste material must be in contact with the gases containing the SOx compounds. The contact can occur during the calcination step in the kiln or anywhere between the process of SOX emissions and combustion gases filtration. For example, the calcination step may be adapted so that calcination of the raw clay material is occurring in the presence of the waste material. This enables the waste material to react with the SOx emitted from the raw clay material at elevated temperatures. "In the presence of" waste material can take various forms, such as direct contact or exposure to the off-gases resulting from the calcination of the clay. When the raw clay material and the waste material are in direct contact, they can be mixed or blended thoroughly before or during the calcination process. This ensures a uniform distribution of the waste material within the raw clay material, allowing for optimal chemical and/or physical interaction during the calcination process. In this case, a preferred embodiment of the method of the invention provides for a step of mixing or co-grinding the raw clay material with the waste material to obtain a raw material mixture and calcining the raw material mixture.

Alternatively, layering the waste material with the raw clay material in the calcination kiln may be another effective method, as it allows the heat and gases to permeate through both materials, facilitating the necessary chemical and/or physical reactions.

In a further aspect, the waste material is allowed to react with the sulfur-containing off-gases generated during the calcination of the raw clay material. In this scenario, the waste material is positioned in a way that it comes into contact with the off-gases, thereby capturing and reacting with the sulfur compounds. Preferably, the step of contacting the sulfur oxides with the waste material comprises injecting the waste material into an exhaust gas of said calcination, said exhaust gas containing the sulfur oxides.

Another effect of the invention is that sulfur oxides originating from the fuel that is used for the calcination step can also be captured by being contacted with the waste material. In this connection, a preferred embodiment of the invention provides that a fuel comprising sulfur compounds is combusted for providing thermal energy to the step of calcining the raw claim material, wherein the sulfur compounds present in the fuel are oxidized to sulfur oxides.

If, according to a preferred embodiment, a waste material is used that is susceptible of pozzolanic and/or hydraulic activation by calcination, the waste material is thermally activated when being contacted with the sulfur oxides to obtain an activated waste material. Thermal activation is preferably carried out at a temperature of at least 400°C. In such an embodiment, an additional effect of the invention is that waste material that would otherwise contribute to environmental degradation is turned into an activated, i.e. pozzolanic and/or hydraulic, material which increases the cementitious properties of the resulting calcined material. In this way, the quality of the calcined clay is enhanced by enriching its reactivity. The resulting calcined material, comprising calcined clay and activated waste material, exhibits improved performance characteristics, making it highly suitable for use in cementitious applications.

The reaction mechanisms that enable the trapping of sulfur oxides by means of the hydrated cement paste have not been fully studied yet, but it is assumed that reactive calcium compounds in the waste material react with sulfur oxide compounds emitted from the fuel and the raw clay material during calcination. CaO contained in the waste material, for example under Ca(OH)₂ or C-S-H (calcium-silicate-hydrate) or CaCO₃ forms, reacts with the sulfur oxides in order to precipitate in a calcium sulfate form:

CaO + SO₂ (gas) + ½ O₂ (gas) → CaSO₄ (solid)

This calcium sulfate may be stable at the calcination temperature reached for calcined clay production, thereby preventing the SOx to be reemitted again.

The waste material comprises hydrated cement paste. According to a preferred embodiment of the invention, the waste material is a concrete based waste material and is selected from construction demolition material, recycled cement paste, concrete return for ready-mix plants, a concrete mud from a ready-mix plant, demolished concrete, fine fractions of recycled concrete, concrete sludge, mixed rubbles, and mixtures thereof. Concrete based waste material refers to any waste or by-product that is derived from concrete. This encompasses a wide range of materials that originate from the lifecycle of concrete, including its production, use, and demolition. Such concrete based waste materials are characteristically rich in calcium compounds, primarily calcium hydroxide (Ca(OH)₂) and calcium carbonate (CaCO₃) and calcium silicate hydrates. Using concrete based waste material in the invention for producing a supplementary cementitious material, reduces the need for new raw materials and minimizes the amount of waste sent to landfills, which contributes to the circular economy in the construction industry.

Concrete mud may be obtained by recuperating mud from a decantation basin in a concrete ready-mix plant and reducing the water content of the mud. The excess water of the concrete mud may be removed by known processes such as a filter press, or a heated screw. The concrete mud can be predried in order to reduce its free water content to 25 wt.-% or lower, preferably 20 wt.-% or lower. Free water is defined by water that is able to evaporate at temperatures below 105°C.

The waste material may also be obtained from recycled concrete by crushing recycled concrete, separating a fine fraction of said crushed recycled concrete from a coarse fraction and using the fine fraction as the sorbent for capturing sulphur compounds from the raw clay material. The fine fraction is preferably composed of particles having a particle size of 0-4mm, preferably 0-3mm, in particular 0-2mm. This fine fraction is composed of hardened cement paste, and fine quartz or limestone sand coming from the sand in the recycled concrete.

The waste material may also be recycled cement paste. Recycled cement paste may be produced by processing waste concrete, typically sourced from demolished structures or leftover concrete from construction sites. The process begins with the crushing of the waste concrete to break it down into smaller pieces. This is usually done using specialized machinery, such as jaw crushers or impact crushers, which effectively reduce the concrete into smaller, manageable aggregates. After the initial crushing, the material undergoes further processing to separate the cement paste from the aggregates. This separation can be achieved through various methods, such as attrition based deagglomeration or wet processing, where the crushed concrete is mixed with water. The mixture is then agitated, allowing the cement paste to be separated from the larger aggregates due to differences in particle size and density. The suspended cement particles are then collected and dried to produce recycled cement paste.

Concrete return for ready-mix plants refers to the excess or leftover concrete that is returned to the plant after a concrete delivery. In the ready-mix concrete industry, it is common to produce more concrete than what is actually required at the construction site to ensure that enough material is available to complete the job. This overestimation is a standard practice to account for variables like irregularities in the measurements of the area being concreted, additional requirements on-site, or simply to avoid the risk of under-supplying. When a concrete truck returns to the plant with unused concrete, this material is known as "concrete return." Disposing of this excess concrete can be challenging. Traditionally, it might be poured into waste pits at the plant, where it hardens and later needs to be broken up and removed, often ending up in landfills.

The suitable particle size for the waste material in the calcination process may be selected according to the circumstance of the individual process. A smaller particle size is advantageous as it enhances the reactivity, particularly important for the absorption of sulfur compounds and the subsequent formation of calcium sulfate. Finely ground waste material also ensures better distribution and contact with the clay particles during the process. However, the particle size should not be excessively fine as it can lead to operational challenges like dusting or handling difficulties. The optimal particle size is typically determined through a balance between maximizing reactivity and practical considerations related to processing and handling in the specific calcination system being used. Preferably, the particle size of the waste material when being subjected to the calcination step is in the range of 0-30 mm, preferably 0-1 mm and more preferably 0-200 µm.

Various sources of raw clay may be used for the method of the invention. Preferably, the raw clay material is a raw clay and/or a raw marl. Both raw clay and raw marl are naturally occurring materials rich in silicates and other minerals beneficial for cementitious applications. When these materials are used in the calcination process, they contribute to the formation of a high-quality supplementary cementitious material. Raw marl is a sedimentary rock formed from a mixture of clay, calcium carbonate (CaCO₃), and often includes silt. It is typically formed in marine or freshwater environments, where these components accumulate and compact over time. The proportion of clay, calcium carbonate, and silt in marl can vary, influencing its physical properties and texture. The presence of silt, consisting of fine rock and mineral particles, contributes to the coarser texture of marl compared to pure clay.

In order to optimize its use for producing a supplementary cementitious material, the raw clay material may preferably comprise at least 40 wt.-% raw clay. This substantial proportion of raw clay ensures that the final calcined material retains a high content of alumino-silicates, which are essential for the pozzolanic reaction in cementitious applications. The presence of a significant amount of clay enhances the reactivity of the calcined material, making it more effective in reacting with calcium hydroxide during the cement hydration process. Thereby, the high percentage of raw clay contributes to the development of desirable mechanical properties in the cement, such as increased strength and improved durability.

The suitable particle size for the raw clay material in the calcination process may be selected according to the circumstance of the individual process. A finer particle size is generally preferred as it provides a larger surface area for the heat and chemical reactions to occur, facilitating a more uniform and complete calcination. However, the particle size should not be excessively fine as it can lead to operational challenges like dusting or handling difficulties. The optimal particle size is typically determined through a balance between maximizing reactivity and practical considerations related to processing and handling in the specific calcination system being used. Preferably, the particle size of the raw clay material when being subjected to the calcination step is in the range of 0-30 mm.

The raw clay material may contain various clay minerals, such as kaolinite and minerals from the kaolinite group, smectite, illite, sepiolite, attapulgite, and vermiculite, muscovite. Preferably, the raw clay material comprises at least 25% of the clay minerals listed above, expressed as a weight percentage of the raw clay material. The raw material may also be a marl, which is a clay mineral that further comprises calcium carbonates and can further comprise magnesium carbonates.

According to a preferred embodiment of the invention, the calcination is performed at a temperature of 600-850°C. This temperature range ensures that the thermal transformation of the clay minerals occurs optimally, facilitating the development of desirable pozzolanic properties without over-calcination, which can lead to a loss of reactivity.

The duration of the calcination process is not particularly limited. The selection of a suitable calcination time period is influenced by several factors, including the temperature level, particle size of the materials being calcined, and the type of calciner used. The particle size plays a significant role; smaller particles have a larger surface area relative to their volume, which can lead to faster reaction rates, thus requiring shorter calcination times. Also, the type of calciner, such as rotary kilns, fluidized bed calciners, shaft kilns, or flash calciners, impacts the calcination time. Different calciners have varying heat transfer efficiencies and operational dynamics, influencing how quickly and uniformly the material is calcined.

Various types of kilns may be employed for the calcination process. The Lepol kiln, for instance, is a type of grate preheater kiln commonly used in the cement industry. Rotary kilns, on the other hand, are cylindrical vessels that rotate slowly on their axis. There are also kilns that at least partially employ electrical heating, offering a more controlled heating environment and potentially reducing carbon emissions associated with fuel combustion. It is also possible to use a flash calciner.

As to the amount of waste material added to the calcination process of the raw clay material, the suitable range is dependent on the specific characteristics of both the waste material and the raw clay, as well as the desired properties of the final product. A suitable minimum amount is necessary to ensure that there is enough waste material to react with the sulfur compounds present in the raw clay material and present in the fuels. This minimum amount is typically determined by the amount needed to effectively mitigate SOx emissions and enhance the cementitious quality of the final product. On the other hand, a suitable maximum amount of waste material is dictated by factors such as the risk of diminishing the quality of the calcined clay, potential negative impacts on the mechanical properties of the resulting cementitious material, and practical considerations related to handling and processing.

According to a preferred embodiment of the method of the invention, the above requirements may be met by providing the raw clay material and the waste material in a weight ratio of 50:1 to 1:1, preferably 20:1 to 1:1, more preferably between 10:1 and 2:1.

The invention will now be described with reference to the following examples.

### Example 1

A raw mix with 20% concrete demolition material and 80% raw clay was calcined in a LEPOL grate process and compared the calcination of the same raw clay without concrete demolition material (reference test). The concrete demolition material and the clay were ground together before being granulated. The granules were then calcined.

### Materials used:

The raw clay (reference test) is a marl with 29% clay minerals and 38% calcite. The concrete demolition material used is a hardened concrete sludge from ready-mix concrete plants.

The chemical composition of the concrete demolition material was measured by X-ray fluorescence (XRF) and is reported in the following table:

| | Concrete demolition material |
|---|---|
| LOI 950°C (wt.-%) | 18.6 |
| SiO₂ (wt.-%) | 26.4 |
| Al₂O₃ (wt.-%) | 5.6 |
| Fe₂O₃ (wt. -%) | 3.3 |
| CaO (wt.-%) | 37.4 |
| MgO (wt.-%) | 1.80 |
| K₂O (wt.-%) | 0.75 |
| Na₂O (wt.-%) | 0.65 |
| P₂O₅ (wt.-%) | 0.13 |

The chemical composition of the concrete demolition material mixed with the raw clay was measured by X-ray fluorescence (XRF) and is reported in the following table:

| | Marl 100% | Mix (Marl 80 wt.-% / concrete demolition material 20 wt.-%) |
|---|---|---|
| LOI 950°C (wt.-%) | 22.91 | 22.99 |
| SiO₂ (wt.-%) | 34.49 | 33.4 |
| Al₂O₃ (wt.-%) | 9.76 | 8.91 |
| Fe₂O₃ (wt. -%) | 3.44 | 3.18 |
| CaO (wt.-%) | 23.99 | 26.21 |
| MgO (wt.-%) | 1.6 | 1.54 |
| K₂O (wt.-%) | 1.63 | 1.47 |
| Na₂O (wt.-%) | 0.11 | 0.13 |
| SO₃ (wt.-%) | 0.98 | 1.08 |
| TiO₂ (wt.-%) | 0.53 | 0.48 |
| Mn₂O₃ (wt.-%) | <0.05 | <0.05 |
| P₂O₅ (wt.-%) | 0.07 | 0.07 |
| Cr₂O₃ (wt.-%) | <0.05 | <0.05 |
| ZrO₂ (wt.-%) | <0.05 | <0.05 |
| SrO (wt.-%) | 0.07 | 0.07 |
| Total (wt.-%) | 99.6 | 99.6 |

The mineralogical composition of the concrete demolition material mixed with the raw clay was measured by X-ray diffraction (XRD - Rietveld method) and is reported in the following table:

| | Marl 100% | Mix (Marl 80 wt.-% / Concrete demolition material wt.-20%) |
|---|---|---|
| Quartz (wt.-%) | 21 | 21 |
| Muscovite (wt.-%) | 19 | 18 |
| Kaolinite (wt.-%) | 10 | 9 |
| Microcline (wt.-%) | 3 | 2 |
| Calcite (wt.-%) | 38 | 40 |
| Dolomite (wt.-%) | 6 | 6 |
| Hematite (wt.-%) | 1 | 2 |
| Pyrite (wt. -%) | 1 | 0 |
| Portlandite (wt.-%) | 0 | 1 |
| Andesine (Ca0.50) (wt.-%) | 2 | 2 |
| Anatase (wt.-%) | 1 | 1 |

The particle size distribution of the marl and the mix of marl and concrete demolition waste was before granulation process was measured by laser diffraction and is reported in the following table:

| | Marl 100% | Mix (Marl 80 wt.-% / concrete demolition material 20 wt.-%) |
|---|---|---|
| D10 (µm) | 2.4 | 2.5 |
| D50 (µm) | 8.2 | 9.2 |
| D90 (µm) | 38.4 | 49.2 |

The clay was preheated in a LEPOL grate for a duration of 45 minutes and was afterwards calcined in a rotary kiln for a duration of 45 minutes with a gradual temperature increase up to a peak temperature of approximatively 800°C.

The amount of SOx was measured at the kiln outlet and at the cement kiln stack, and the addition of concrete demolition waste resulted in a drop in SOx emissions.

The average SOx emissions were measured during two stable periods of about 8 hours, and the results are reported in the following table:

| Material | SO₂ at kiln outlet(ppm) | SOx at the stack (mg/NM3@10%O2) |
|---|---|---|
| Reference - No concrete demolition waste used | 892 | 93 |
| concrete demolition material used at dosage of 20 wt.-% | 1020 | 3 |

One can see that although the level of emission at the kiln level is similar with the 2 mixes, the SOx at the stack is highly reduced when concrete demolition waste is used.

### Example 2

In this second experiment the kiln filter temperature was kept constant in the two raw mixes configurations over a period of one hour.

| Material | SO₂ at kiln outlet (ppm) | SOx stack (mg/NM3@10%O2) | Filter temperature |
|---|---|---|---|
| Reference | 940 | 46 | 85°C |
| concrete demolition material used at dosage of 20 wt.-% | 1195 | 0.43 | 84°C |

As can be seen, the observations and conclusions of example 1 remain valid at the same filter temperature.

## Claims

1. A method of calcining a raw clay material for use as a supplementary cementitious material, comprising:
providing a raw clay material comprising sulfur compounds,
providing a waste material comprising hydrated cement paste,
calcining the raw clay material to obtain a calcined material comprising calcined clay, wherein the sulfur compounds present in the raw clay material are oxidized to sulfur oxides,
contacting the sulfur oxides with the waste material, and allowing the sulfur oxides to chemically react with or be adsorbed in the waste material.

2. Method according to claim 1, wherein a fuel comprising sulfur compounds is combusted for providing thermal energy to the step of calcining the raw claim material, wherein the sulfur compounds present in the fuel are oxidized to sulfur oxides.

3. Method according to claim 1 or 2, further comprising a step of mixing the raw clay material with the waste material to obtain a raw material mixture and calcining the raw material mixture.

4. Method according to claim 1, 2 or 3, wherein the step of contacting the sulfur oxides with the waste material comprises injecting the waste material into an exhaust gas of said calcination, said exhaust gas containing the sulfur oxides.

5. Method according to any one of claims 1 to 4, wherein the waste material is susceptible of pozzolanic and/or hydraulic activation by calcination and is activated when being contacted with the sulfur oxides to obtain an activated waste material.

6. Method according to any one of claims 1 to 5, wherein the waste material is selected from construction demolition material, recycled cement paste, concrete return for ready-mix plants, a concrete mud from a ready-mix plant, demolished concrete, fine fractions of recycled concrete, concrete sludge, mixed rubbles, and mixtures thereof.

7. Method according to any one of claims 1 to 6, wherein the raw clay material is a raw clay and/or a raw marl.

8. Method according to any one of claims 1 to 7, wherein the raw clay material comprises at least 25 wt.-% raw clay.

9. Method according to any one of claims 1 to 8, wherein calcination is performed at a temperature of 600-850°C.

10. Method according to any one of claims 1 to 9, wherein the raw clay material and the waste material are provided in a weight ratio of 20:1 to 1:1.
